# EUROPEAN PATENT SPECIFICATION

(11) **EP 3 489 635 B1**
(45) Date of publication and mention of the grant of the patent: **06.01.2021**
(21) Application number: 18208151.3
(22) Date of filing: 23.11.2018
(51) Int. Cl.: G01F 17/00, G01F 22/00, F17B 1/26

(54) **A SYSTEM FOR MEASURING THE GAS LEVEL IN A DOUBLE MEMBRANE GASOMETER**
SYSTEM ZUR FÜLLSTANDSMESSUNG IN EINEM DOPPELMEMBRAN-GASOMETER
SYSTÈME DE MESURE DU NIVEAU DE GAZ DANS UN GAZOMÈTRE À DOUBLE MEMBRANE

(30) Priority: 23.11.2017 IT 201700134734
(43) Date of publication of application: 29.05.2019
(73) Proprietor: Corradi & Ghisolfi Srl, 26010 Corte de' Frati (CR) (IT)
(72) Inventor: Corradi, Paolo, I-26010 Italy (IT); Corradi, Bruno, I-26010 Italy (IT)
(74) Representative: Fezzardi, Antonio

(56) References cited:
- EP-A1- 2 535 402
- DE-A1-102007 012 011
- DE-B3-102013 213 431
- US-A1- 2012 067 117

## Description

The present invention applies to the field of double membrane gasometers of the type known to be used for storing biogas, which may be generated by the digestion of sludge, slurry and organic substances generally, or may come from the exhalations of collection tanks of slurry containing fermentable material.

The present invention particularly relates to a fill gauge adapted to detect the quantity of gas or biogas contained in said gasometers or biogas accumulators.

Membrane gasometers are known, consisting of a closed casing made with at least one gas impermeable membrane.

They generally comprise a first inner membrane which delimits a chamber for storing the gas, and a second more outer chamber adapted to define a pressurization chamber between the two membranes, generally an air chamber, which is adjacent to said gas storage chamber. The latter is connected to inlet and outlet pipelines of the gas contained therein, or it is located directly above a tank for storing the slurry or sludge, from which the biogas is emanated.

The pressurization chamber instead is connected to a compressor or an auxiliary fan adapted to maintain a given pressure of the air inside the chamber itself.

Usually, the first membrane in pressure controlled accumulators forms a dome above the sludge, and the second membrane forms a more outer dome, which encloses the first.

In other cases, the second membrane consists of a rigid material dome and the above-described pressure chamber consists of a simple aerated gap in order to avoid hazardous gas accumulation.

The correct use of gasometers requires the filling level of the gas storage chamber to be constantly known, both for managing the system and adjusting the accumulator during the normal operation, and for safety purposes.

It is apparent that since the inner dome is enclosed within the outer one, a visual inspection of the level is not possible, thus there is a need for a specific measurement device.

According to the known art, various types of devices for measuring the filling level of the gas storage chamber exist: a first technical solution provides measuring the distance between the summit of the first membrane and the corresponding summit of the second membrane. Indeed, as it is pressurized, the second membrane substantially always keeps the same shape, while the first membrane is raised and lowered according to the quantity of gas contained therein. Thus, the distance between the summits of the two membranes is easy to correlate with the quantity of gas contained in the storage chamber.

A second technical solution currently known provides measuring the weight of an element which is hooked to the summit of the second membrane and is upheld by the summit of the first membrane containing the biogas. The measurable weight of the element upheld by the first membrane decreases here as the filling of the dome on which it rests increases, and vice versa. Thus, the measurement of the weight force of such an element may be correlated with the quantity of gas contained.

One of the disadvantages of such known systems is that the membrane containing the gas doesn't always keep a correct symmetrical geometry (such as a spherical cap) and this results in incorrect measurements.

A gauge of the filling level of a double membrane gasometer is known from US 2012/067117, which includes a storage chamber prepared for containing a gas and an impermeable flexible membrane capable of moving between two positions corresponding to the chamber completely full and completely empty, in which the gauge comprises an instrument which detects the lengthening of a spring on which the summit of the membrane itself is hung. A problem of such a known system is that the measurements are inaccurate and not very reliable.

It is known, from DE 10 2013 213431, device for measuring the filling volume of biogas plants with double membrane, wherein air is forced between two membranes at a pressure of typically 2 to 15 mbar, so that a relatively stable roof is formed. On the lower membrane a plurality of measuring units designed as overflow vessels are mounted, which are connected via inlet and suction hoses with one or more pressure gauges and collecting vessels.

A drawback of such a known system, is that said plurality of measuring units is needed in order to allow the detection of height at several points selected mathematically on the surface of the inner membrane.

Furthermore, a system for measuring the filling level for a gasometer provided with a compensating tank provided with a measuring head is known from DE 10 2007 012011, in which a flexible tube filled with water connects said tank to a pressure sensor. The compensating tank, which is arranged at the summit of the gasometer cover, is designed so that the effect of the atmospheric pressure on the water column and water losses are avoided. A problem of such a known system is that the compensating tank is exposed to the outdoor environment and, as the chamber is closed, the temperature variations may also significantly affect the internal pressure of fluid acting on the pressure sensor, thus distorting the measurement of the actual filling level of the gasometer.

It is the main object of the present invention to overcome the aforesaid problems by providing a system for measuring the gas level in a membrane gasometer of the type having a fixed outer dome or membrane and a movable inner dome or membrane, overlapping each other, between which there is air kept at a constant pressure, in which there are provided means for keeping the inner membrane for containing the gas with a correct geometrical shape as the quantity of gas therein varies, means for detecting the variation in height of the summit of said inner membrane containing the gas, and also elastic means, which comprise at least one elastic element, having an elastic force which is almost constant as its own deformation varies; wherein said means for detecting the variation in height of the inner dome comprise a receptacle containing an incompressible measuring liquid having known specific weight, which receptacle is integrally installed at the summit of the inner dome itself, and which is vertically movable therewith so as to vary its vertical position as the filling level of the gasometer dome varies; said receptacle containing the measuring liquid being connected at the top to the summit of the outer dome by means of said elastic means, which are adapted to keep the receptacle - and therefore the summit of the inner dome integral therewith - in always symmetrical and centered position during the vertical raising/lowering movement thereof, as the filling level of the gasometer itself varies; and wherein said receptacle has an upper vent to avoid the possible evaporation of the incompressible measuring liquid from increasing the internal pressure of the receptacle itself and therefore the measurement detected by a pressure sensor from being distorted; said receptacle containing the measuring liquid being connected to a pressure sensor by means of at least one flexible tube, which pressure sensor is installed at a fixed height arranged below the minimum height reachable from the summit of the inner dome; thus obtaining that the hydrostatic pressure resting on the pressure sensor increases as the height reached by the receptacle containing the measuring liquid increases, and vice versa.

A better understanding of the invention is possible through the following description and with reference to the accompanying drawings, which show a preferred embodiment by mere way of non-limiting example.

In the drawings:

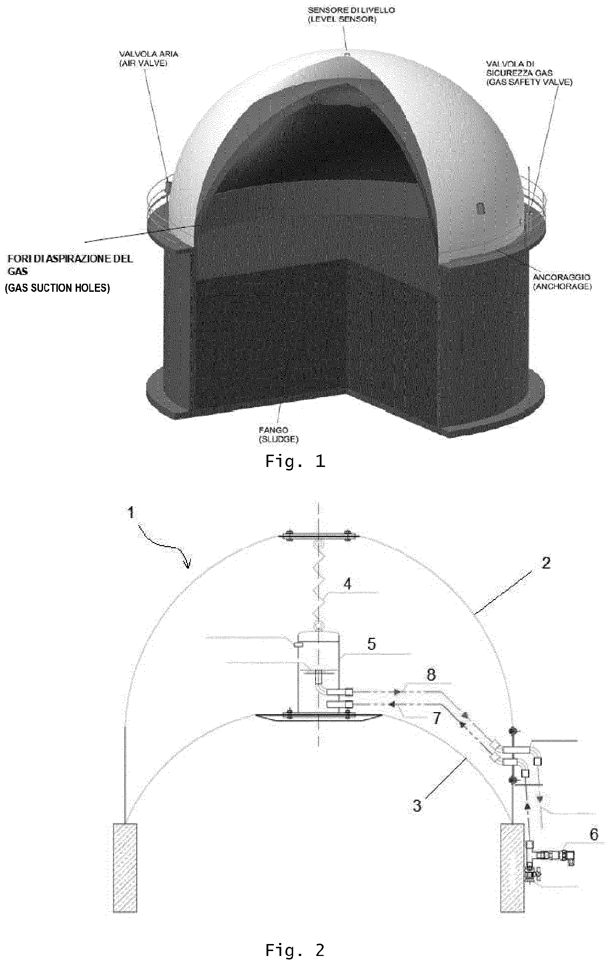

figure 1 shows an example of cylindrical digester with gas dome of known type, in which the level of the biogas is measured through the length of a string or chain connected at the summit of the outer dome;
figure 2 shows a vertical cross section of the measuring system according to the present invention.

With reference to the accompanying drawings, a device is provided for detecting the variation in height of the movable inner dome or membrane (3) containing the gas, comprising a receptacle (5) containing an incompressible measuring liquid having known specific weight, such as for example glycol or water, which receptacle is integrally installed at the summit of the dome itself, and which is vertically movable therewith so as to vary its height as the filling level of the gasometer dome varies. Said receptacle containing the measuring liquid consists, for example, of a vessel and is connected at the top to the summit of the upper dome by means of an elastic element (4), such as for example a preloaded spring characterized by an elastic force which is almost constant as its own deformation varies, which spring is adapted to keep the receptacle - and therefore the summit of the inner dome (3) integral therewith - in always symmetrical and centered position during the vertical raising/lowering movement thereof as the filling level of the gasometer itself varies.

According to the present invention, said receptacle (5) containing the measuring liquid is connected to a pressure sensor (6) by means of at least one flexible tube (7), which pressure sensor is installed at a fixed height, preferably at the anchoring base of the inner dome (3), I below the minimum height reachable from the summit of such a dome. Accordingly, the hydrostatic pressure resting on the pressure sensor increases as the height reached by the receptacle (5) containing the measuring liquid increases, and vice versa.

As far as the above, a peculiarity of the invention is that the pressure which can be detected by the pressure sensor (6) is a function of the altitude, i.e. the height, reached from the summit of the inner dome (3) which contains the gas and therefore, is a function of the quantity of gas contained in the gasometer (1). To this end, it is also worth noting that the value of the pressure of the air contained between the inner and outer dome may also be taken into consideration for an increased accuracy of the measurement, which pressure generally is of a few bar (2 to 7 mbar), equaling 2 to 7 cm of water column.

The measurement of the filling level of the gas dome may be advantageously obtained directly from the pressure sensor (6) by calibrating the pressure sensor with the system completely empty and with the system completely full of gas, respectively - i.e. at the minimum height and at the maximum height of the inner dome.

It is convenient noting that the filling values of the inner dome may be provided by obtaining them from the construction drawings. Indeed, according to the position of the pressure sensor, 0% and 100% of filling of the dome are known, in addition to the intermediate volumes which can be calculated as the liquid column detected by the pressure sensor varies and as the geometrical variation of the dome itself then varies.

In the example shown, the inner dome (3) and the outer dome (2) are coaxial so that the summits thereof overlap so that the spring which connects the upper end of the outer dome to the receptacle containing the measuring liquid - which receptacle is fastened on the end of the inner dome - are on the same axis which coincides with the axis of the two domes. With this configuration, the preloaded spring (4) guides and keeps the movements of the receptacle (5) of the measuring liquid - and of the summit of the inner dome (3) with which it is integral - along the vertical direction during the lowering/raising movements caused by the generation of biogas and by the conveying thereof outside the gasometer.

According to a peculiar feature of the invention, the presence of said guide spring (4) always keeps the shape of the membrane which forms the inner dome (3) symmetrical, thus avoiding the formation of gas pockets which could cause undesired deformations of the membrane which do not allow the quantity of gas therein to be correctly detected.

The receptacle (5) has an upper vent provided with a silencer valve to avoid the possible evaporation of the water or of the glycol from increasing the internal pressure of the receptacle itself, and accordingly the measurement detected by the pressure sensor (6) from being distorted. Moreover, a second topping up/filling/discharging tube (8) connected to the same receptacle (5) is also provided to ensure that the filling level of the measuring liquid does not exceed the maximum value provided and to carry out any top-up operations.

A preferred embodiment of the present invention was described and disclosed, but it is apparent that those skilled in the art may make functionally and/or technically equivalent modifications and/or replacements without departing from the scope of protection of the present industrial property right as defined in the appended claims.

For example, vessel 5, being integral with the inner membrane 3, may be connected to the outer dome 2 by means of an element consisting of an inextensible part (such as a cable) and of an elastic part rather than by means of the elastic spring 4 alone shown in the drawings.

## Claims

1. A system for measuring the gas level in a membrane gasometer (1), comprising a fixed outer dome or membrane (2) and a movable inner dome or membrane (3), overlapping each other, between which there is air kept at a constant pressure, wherein it provides means for keeping the inner membrane (3) for containing the gas with a symmetrical geometry as the quantity of gas therein varies, means for detecting the variation in height of the summit of said inner membrane (3) containing the gas, and also elastic means, which comprise at least one elastic element (4), having an elastic force which is almost constant as its own deformation varies; **characterized in that** said means for detecting the variation in height of the inner dome (3) comprise a receptacle (5) containing an incompressible measuring liquid having known specific weight, which receptacle is integrally installed at the summit of the inner dome (3) itself, and which is vertically movable therewith so as to vary its vertical position as the filling level of the gasometer dome varies; said receptacle containing the measuring liquid being connected at the top to the summit of the outer dome (2) by means of said elastic means, which are adapted to keep the receptacle (5)
- and therefore the summit of the inner dome (3) integral therewith - in always symmetrical and centered position during the vertical raising/lowering movement thereof, as the filling level of the gasometer itself varies; and wherein said receptacle (5) has an upper vent to avoid the possible evaporation of the incompressible measuring liquid from increasing the internal pressure of the receptacle itself and therefore the measurement detected by a pressure sensor (6) from being distorted; said receptacle (5) containing the measuring liquid being connected to a pressure sensor (6) by means of at least one flexible tube (7), which pressure sensor is installed at a fixed height arranged below the minimum height reachable from the summit of the inner dome (3); thus obtaining that the hydrostatic pressure resting on the pressure sensor (6) increases as the height reached by the receptacle (5) containing the measuring liquid increases, and vice versa.

2. A system according to the preceding claim, **characterized in that** the pressure which can be detected by the pressure sensor (6) is a function of the altitude, i.e. the height, reached from the summit of the inner dome (3) which contains the gas and therefore, is a function of the quantity of gas contained in the gasometer.

3. A system according to claim 1 or 2, **characterized in that** in order to obtain the measurement of the filling level of the inner dome (3) directly from the pressure sensor (6), the latter can be calibrated with the system completely empty and with the system completely full of gas, respectively, i.e. at the minimum height and at the maximum height of the inner dome.

4. A system according to one of the preceding claims, **characterized in that** the inner dome (3) and the outer dome (2) are coaxial so that the summits thereof are overlapping so that the elastic means (4) which connect the upper end of the outer dome (2) to the receptacle (5) containing the measuring liquid, which receptacle is fastened on the end of the inner dome (3), are on the same axis which coincides with the axis of the two domes; thus obtaining with this configuration that said elastic means (4) guide and keep the movements of the receptacle (5) of the measuring liquid - and of the summit of the inner dome (3) with which it is integral - along the vertical direction during the lowering/raising movements caused by the generation of biogas and by the conveying thereof outside the gasometer.

5. A system according to one of the preceding claims, **characterized in that** said elastic means comprise a guide spring (4) which is configured to keep the shape of the membrane which forms the inner dome (3) constantly with a symmetrical geometry and to avoid the formation of gas pockets which could cause undesired deformations of the membrane which do not allow the quantity of gas therein to be correctly detected.

6. A system according to one of the preceding claims, **characterized in that** there is also provided a second topping up/filling/discharging tube (8), connected to the same receptacle (5), configured to ensure that the filling level of the measuring liquid does not exceed the maximum value provided.

7. A system according to claim 1, **characterized in that** said elastic element (4) is a preloaded spring.

8. A system according to claim 1, **characterized in that** said incompressible measuring liquid is glycol or water.

## Patentansprüche

1. System zum Messen des Gaspegels in einem Membran-Gasometer (1), umfassend eine feste äußere Kuppel oder Membran (2) und eine bewegliche innere Kuppel oder Membran (3), die einander überlappen, zwischen denen Luft auf einem konstanten Druck gehalten wird, wobei es für Mittel sorgt, durch die die innere Membran (3) das Gas mit einer symmetrischen Geometrie enthält, wenn sich die Gasmenge darin ändert, Mittel zum Erkennen der Höhenänderung des Scheitels der genannten inneren Membran (3), die das Gas enthält, und auch elastische Mittel, die mindestens ein elastisches Element (4) umfassen, das eine elastische Kraft aufweist, die bei der Änderung seiner eigenen Verformung nahezu konstant ist;
**dadurch gekennzeichnet, dass** die genannten Mittel zum Feststellen der Höhenänderung der inneren Kuppel (3) einen Behälter (5) umfassen, der eine inkompressible Messflüssigkeit mit bekanntem spezifischem Gewicht enthält, wobei der Behälter integral an der Spitze der inneren Kuppel (3) selbst installiert ist und mit dieser vertikal beweglich ist, sodass er seine vertikale Position mit der Änderung des Füllstands der Gasometerkuppel verändert; wobei der Behälter, der die Messflüssigkeit enthält, oben mit dem Scheitelpunkt der äußeren Kuppel (2) mittels der elastischen Mittel verbunden ist, die dafür ausgelegt sind, den Behälter (5) und somit den Scheitelpunkt der inneren Kuppel (3) während der vertikalen Hebe-/Senkbewegung desselben immer in symmetrischer und zentrierter Position zu halten, wenn sich der Füllstand des Gasometers selbst ändert; und wobei der Behälter (5) eine obere Entlüftungsöffnung aufweist, um zu verhindern, dass die mögliche Verdunstung der inkompressiblen Messflüssigkeit den Innendruck des Behälters selbst erhöht und daher der von einem Drucksensor (6) erkannte Messwert verfälscht wird; wobei der Behälter (5), der die Messflüssigkeit enthält, mit einem Drucksensor mittels mindestens eines flexiblen Schlauchs (7) verbunden ist, wobei der Drucksensor in einer festen Höhe installiert ist, die unterhalb der vom Scheitelpunkt der inneren Kuppel (3) aus erreichbaren Mindesthöhe angeordnet ist; wodurch so erreicht wird, dass sich der auf dem Drucksensor (6) ruhende hydrostatische Druck mit zunehmender Höhe des Behälters (5), der die Messflüssigkeit enthält, erhöht und umgekehrt.

2. System nach dem vorhergehenden Anspruch, **dadurch gekennzeichnet, dass** der Druck, der durch den Drucksensor (6) festgestellt werden kann, eine Funktion der Höhe ist, d.h. der Höhe, die vom Scheitelpunkt der inneren Kuppel (3), die das Gas enthält, erreicht wird, und daher eine Funktion der im Gasometer enthaltenen Gasmenge ist.

3. System nach Anspruch 1 oder 2, **dadurch gekennzeichnet, dass**, um die Messung des Füllstands der inneren Kuppel (3) direkt vom Drucksensor (6) zu gewinnen, dieser mit dem System bei vollständig leerem System bzw. bei vollständig mit Gas gefülltem System kalibriert werden kann, d.h. bei der minimalen Höhe und bei der maximalen Höhe der inneren Kuppel.

4. System nach einem der vorhergehenden Ansprüche, **dadurch gekennzeichnet, dass** die innere Kuppel (3) und die äußere Kuppel (2) koaxial sind, sodass ihre Scheitelpunkte sich überlappen, sodass die elastischen Mittel (4), die das obere Ende der äußeren Kuppel (2) mit dem die Messflüssigkeit enthaltenden Behälter (5) verbinden, der am Ende der inneren Kuppel (3) befestigt ist, auf der gleichen Achse liegen, die mit der Achse der beiden Kuppeln zusammenfällt; wobei mit dieser Konfiguration erreicht wird, dass die genannten elastischen Mittel (4) die Bewegungen des Behälters (5) der Messflüssigkeit - und des Scheitels der inneren Kuppel (3), mit der sie integral verbunden ist - in vertikaler Richtung während der Absenk-/Aufwärtsbewegungen führen und halten, die durch die Erzeugung von Biogas und dessen Beförderung außerhalb des Gasometers bewirkt werden.

5. System nach einem der vorhergehenden Ansprüche, **dadurch gekennzeichnet, dass** die elastischen Mittel eine Führungsfeder (4) umfassen, die so ausgelegt ist, dass sie die Form der Membran, die die innere Kuppel (3) bildet, konstant mit einer symmetrischen Geometrie hält und die Bildung von Gaseinschlüssen vermeidet, die unerwünschte Verformungen der Membran bewirken könnten, die es nicht erlauben, die darin enthaltene Gasmenge korrekt festzustellen.

6. System nach einem der vorhergehenden Ansprüche, **dadurch gekennzeichnet, dass** auch ein zweites Nachfüll-/Füll-/Entladerohr (8) vorgesehen ist, das mit demselben Behälter (5) verbunden und so ausgelegt ist, dass der Füllstand der Messflüssigkeit den vorgesehenen Höchstwert nicht überschreitet.

7. System nach Anspruch 1, **dadurch gekennzeichnet, dass** das elastische Element (4) eine vorgespannte Feder ist.

8. System nach Anspruch 1, **dadurch gekennzeichnet, dass** die inkompressible Messflüssigkeit Glykol oder Wasser ist.

## Revendications

1. Système de mesure du niveau de gaz dans un gazomètre à membrane (1), comprenant un dôme ou une membrane externe fixe (2) et un dôme ou une membrane interne mobile (3), se chevauchant mutuellement, entre lesquels de l'air est maintenu à une pression constante, dans lequel il prévoit des moyens pour maintenir la membrane interne (3) pour contenir le gaz avec une géométrie symétrique lorsque la quantité de gaz en son sein varie, des moyens pour détecter la variation de hauteur du sommet de ladite membrane interne (3) contenant le gaz, et également des moyens élastiques, qui comprennent au moins un élément élastique (4), ayant une force élastique qui est pratiquement constante lorsque leur propre déformation varie ;
**caractérisé en ce que** lesdits moyens pour détecter la variation de hauteur du dôme interne (3) comprennent un réceptacle (5) contenant un liquide de mesure incompressible ayant un poids spécifique connu, lequel réceptacle est installé de manière solidaire au sommet du dôme interne (3) lui-même, et lequel est verticalement mobile avec celui-ci de façon à faire varier sa position verticale lorsque le niveau de remplissage du dôme de gazomètre varie ; ledit réceptacle contenant le liquide de mesure étant relié en haut au sommet du dôme externe (2) au moyen desdits moyens élastiques, lesquels sont adaptés pour maintenir le réceptacle (5) - et par conséquent le sommet du dôme interne (3) solidaire de celui-ci - en position toujours symétrique et centrée pendant son mouvement de montée/descente vertical, lorsque le niveau de remplissage du gazomètre lui-même varie ; et dans lequel ledit réceptacle (5) possède un évent supérieur pour éviter que l'évaporation possible du liquide de mesure incompressible augmente la pression interne du réceptacle lui-même et par conséquent que la mesure détectée par un capteur de pression (6) soit faussée ; ledit réceptacle (5) contenant le liquide de mesure étant relié à un capteur de pression (6) au moyen d'au moins un tube flexible (7), lequel capteur de pression est installé à une hauteur fixe agencée au-dessous de la hauteur minimale atteignable à partir du sommet du dôme interne (3) ; en obtenant ainsi que la pression hydrostatique reposant sur le capteur de pression (6) augmente lorsque la hauteur atteinte par le réceptacle (5) contenant le liquide de mesure augmente, et vice-versa.

2. Système selon la revendication précédente, **caractérisé en ce que** la pression qui peut être détectée par le capteur de pression (6) est une fonction de l'altitude, c'est-à-dire de la hauteur, atteinte à partir du sommet du dôme interne (3) qui contient le gaz et par conséquent, est une fonction de la quantité de gaz contenue dans le gazomètre.

3. Système selon la revendication 1 ou 2, **caractérisé en ce que**, afin d'obtenir la mesure du niveau de remplissage du dôme interne (3) directement à partir du capteur de pression (6), ce dernier peut être étalonné avec le système complètement vide et avec le système complètement plein de gaz, respectivement, c'est-à-dire à la hauteur minimale et à la hauteur maximale du dôme interne.

4. Système selon l'une des revendications précédentes, **caractérisé en ce que** le dôme interne (3) et le dôme externe (2) sont coaxiaux de sorte que leurs sommets se chevauchent de sorte que les moyens élastiques (4) qui relient l'extrémité supérieure du dôme externe (2) au réceptacle (5) contenant le liquide de mesure, lequel réceptacle est fixé sur l'extrémité du dôme interne (3), sont sur le même axe qui coïncide avec l'axe des deux dômes ; en obtenant ainsi avec cette configuration que lesdits moyens élastiques (4) guident et maintiennent les mouvements du réceptacle (5) du liquide de mesure - et du sommet du dôme interne (3) avec lequel il est solidaire - le long de la direction verticale pendant les mouvements de descente/montée provoqués par la génération de biogaz et par le transport de celui-ci à l'extérieur du gazomètre.

5. Système selon l'une des revendications précédentes, **caractérisé en ce que** lesdits moyens élastiques comprennent un ressort de guidage (4) qui est configuré pour maintenir la forme de la membrane qui forme le dôme interne (3) constamment avec une géométrie symétrique et pour éviter la formation de poches de gaz qui pourraient provoquer des déformations indésirables de la membrane qui ne permettent pas à la quantité de gaz en son sein d'être correctement détectée.

6. Système selon l'une des revendications précédentes, **caractérisé en ce qu'**il est également prévu un second tube de réapprovisionnement/remplissage/évacuation (8), relié au même réceptacle (5), configuré pour garantir que le niveau de remplissage du liquide de mesure ne dépasse pas la valeur maximale prévue.

7. Système selon la revendication 1, **caractérisé en ce que** ledit élément élastique (4) est un ressort précontraint.

8. Système selon la revendication 1, **caractérisé en ce que** ledit liquide de mesure incompressible est du glycol ou de l'eau.
